# EUROPÄISCHE PATENTSCHRIFT

(11) **EP 1 644 178 B1**
(45) Veröffentlichungstag und Bekanntmachung des Hinweises auf die Patenterteilung: **28.03.2007**
(21) Anmeldenummer: 04737376.6
(22) Anmeldetag: 09.07.2004
(51) Int. Cl.: B29C 51/26

(54) **TIEFZIEHMASCHINE ZUR HERSTELLUNG VON TIEFGEZOGENEN GEGENSTÄNDEN, BEHÄLTERN, VERPACKUNGEN ODER DGL**
DEEP-DRAWING MACHINE FOR PRODUCING DEEP-DRAWN OBJECTS, CONTAINERS, PACKAGING OR SIMILAR
MACHINE D'EMBOUTISSAGE POUR LA PRODUCTION D'OBJETS, DE CONTENANTS, D'EMBALLAGES OU D'ELEMENTS ANALOGUES EMBOUTIS,

(30) Priorität: 11.07.2003 AT 10672003
(43) Veröffentlichungstag der Anmeldung: 12.04.2006
(73) Patentinhaber: GN Plastics Company Ltd., Chester, NS B0J 1J0 (CA)
(72) Erfinder: Nemeskéri, Karl, 1190 Wien (AT)
(74) Vertreter: Cunow, Gerda
(86) Internationale Anmeldenummer: PCT/AT2004/000246
(87) Internationale Veröffentlichungsnummer: WO 2005/005130

(56) Entgegenhaltungen:
- EP-A- 0 920 975
- US-A- 4 102 964
- US-A1- 2002 081 346
- US-A1- 2003 030 173

## Beschreibung

Die vorliegende Erfindung bezieht sich auf eine Tiefziehmaschine bzw. Thermoformmaschine zur Herstellung von tiefgezogenen Gegenständen, Behältern, Verpackungen oder dgl. aus thermoformbaren Kunststoffolien oder -platten, wobei Folien- oder Plattenzuschnitte in Festhalteeinrichtungen, insbesondere in Spannrahmen, angeordnet und relativ zu Bearbeitungsstationen bewegbar sind, wobei die Festhalteeinrichtungen voneinander getrennt bzw. unabhängig sind.

Tiefziehmaschinen bzw. Thermoformmaschinen sind in der Technik seit längerer Zeit bekannt und werden für die Herstellung einer Vielzahl von Gegenständen aus thermisch verformbaren Kunststoffolien oder Kunststoffplatten verwendet. Grundsätzlich sind in der Tiefziehtechnik drei Arten von Maschinen zu unterscheiden.

Bei der ersten bekannten Art von Tiefziehmaschinen bzw. Thermoformmaschinen wird ein Folienzuschnitt oder Plattenzuschnitt in Spannrahmen eingebracht, wobei die Spannrahmen auf einer karussellartigen Maschine befestigt sind und so die vorgesehenen Arbeitsstationen durchlaufen. Um Massenprodukte herstellen zu können, sind großformatige Folien- oder Plattenzuschnitte erforderlich. Es sind auch mehrere Bearbeitungsstationen notwendig, wie zum Beispiel: Heizen, Tiefziehen bzw. Verformen, Löcher stanzen, die fertigen Produkte ausstanzen, stapeln, etc., und so wird das Förderkarussell zu groß und zu schwer, um bei annehmbarem Energieaufwand schnelle Zykluszeiten erreichen zu können. Deshalb werden solche Maschinen lediglich für aus dicken Plattenzuschnitten herzustellende Produkte, wie z.B. Boote, Eisschranktüren, Spielzeuge und dgl., verwendet, nicht jedoch für die Produktion von Massenwaren, die zu geringstem Preis in hohen Stückzahlen herzustellen sind. Die Verarbeitung von dicken Kunststoffplatten erlaubt sowieso keine schnelle Zykluszeiten, da die Erwärmung der Platten und die Kühlung der Fertigteile nicht schnell gehen kann.

Aus der EP 0 920 975 A ist eine Heizformvorrichtung mit gerader Förderung von umlaufenden Folienhalterahmen bekannt geworden, wobei diese Heizformvorrichtung bzw. Tiefziehmaschine neben einer Heizstation eine Formstation, eine Bestückungsstation und dgl. aufweist, wobei die zu formenden Folien in Spannrahmen bzw. Klemmrahmen eingespannt sind. Die Spann- bzw. Klemmrahmen können entsprechend unabhängig voneinander bewegt werden, um an die entsprechenden Betriebserfordernisse angepaßt zu werden.

Aus der DE 25 18 340 B2 ist eine Anlage zum Verformen von Kunststoffplatten aus warm verformbarem Kunststoff -bekannt geworden, in welcher eine Mehrzahl von geradlinig aufeinander folgend angeordneten Bearbeitungsstationen eingesetzt wird, wie eine Einlegestation, mehrere Heizstationen, eine Formstation und eine Entnahmestation, wobei die Rahmen, in welchen die zu bearbeitenden Kunststoffplatten eingespannt sind, außerhalb der Bearbeitungsstation von der letzten Station zurück zur ersten Bearbeitungsstation geführt werden. Hiebei sind die einzelnen Rahmen voneinander getrennt bzw. unabhängig.

Die zweite Art von den bekannten Thermoformmaschinen arbeitet von einer Folienrolle ausgehend, indem die Folienbahn durch vier Bearbeitungsstationen gezogen wird. In der ersten Station wird die Folie vorgewärmt, worauf sie in der zweiten Station mittels Kontaktheizung auf die Thermoformtemperatur erwärmt und in derselben Station verformt und ausgestanzt wird. In der dritten Station werden die verformten Teile von der Folienbahn getrennt und einer Nachbearbeitung zugeführt. In der vierten Station wird das Stanzgitter aufgerollt. Diese Art von Maschinen ist einfach in dem Aufbau und ist deshalb preisgünstig, ferner arbeitet sie mit wenig Abfall. Diese Art von Maschine ist deshalb sehr verbreitet, obwohl sie mehrere Nachteile aufweist. Sie kann nur Kunststoffolien, jedoch keine Kunststoffplatten verarbeiten. Weiters kann sie Gegenstände, die vergleichsweise große Höhen aufweisen, wie z.B. Joghurtbecher, Trinkbecher, etc., nicht produzieren, da bei der Verformung von solchen Gegenständen die erwärmte Folie vorgestreckt werden muß. Die derartigen Maschinen können jedoch weder vorstrecken, noch mit positiven Formen arbeiten. Die Maschine kann auch nicht flache Tassen oder flache Behälter mit U-Rand produzieren.

Eine dritte Art von Thermoformmaschinen arbeitet ebenso wie die vorherbeschriebene Maschine von einer Folienrolle bzw. Folienbahn ausgehend, wobei die Folienbahn mittels einer Transporteinrichtung, insbesondere mittels Ketten, durch die einzelnen, in einer Linie eingerichteten Bearbeitungsstationen gezogen wird. Diese Art von Thermoformmaschine arbeitet schnell, kann die Folie bei der Verformung vorstrecken, also hohe Gegenstände herstellen, kann positiv oder negativ verformen und auch Tassen oder Behälter mit U-Rand produzieren. Allerdings hat auch diese Maschine Nachteile. So kann diese Art von Thermoformmaschine keine Plattenzuschnitte verarbeiten. Ferner ist, da die Mechanismen der einzelnen Bearbeitungsstationen in der Längsrichtung verschiebbar sein müssen, um mit weniger Abfall arbeiten zu können, der Aufbau dieser Maschine verhältnismäßig aufwendig und kostspielig. Der größte Nachteil dieser Maschinen besteht jedoch darin, daß der Kettentransport auf beiden Seiten der Folienbahn einen bedeutenden Folienabfall verursacht. Die Größe dieses auf den Seiten der Folienbahn entstehenden Abfalls ist ein Mehrfaches des Seitenabfalls bei der vorher als zweite Art von Maschinen beschriebenen Thermoformmaschine. Trotzdem ist diese Maschinenart mit Kettentransport sehr verbreitet, da sie für die Folienverarbeitung eine Universalmaschine ist, alle bekannte Arten von Verformungstechniken benützen kann und die Bearbeitungsstationen beliebig erweiterbar sind.

US 2002/081346 zeigt in parallele Anordnung zueinander zwei, jeweils für sich genommen komplette Thermoformmaschinen mit Arbeitsschritten in Reihenbauweise. US 2003/030173 zeigt eine Thermoformmaschinen in Reihenbauweise, deren Arbeitsschritte sich aber zum Ende des Prozesses hin verzweigen.

EP-A-0 920 975 zeigt eine Thermoformmaschine in Reihenbauweise mit "zwei parallele, übereinander angeordneten Linien, wobei die zweite Linie nur die Rückführung der leeren Spannrahmen beinhaltet.

US-A-4 102 964 zeigt eine Thermoformmaschine in klassischer Reihenbauweise mit Folien in Spannrahmen auf einzelnen Trollies.

Die vorliegende Erfindung zielt nun darauf ab, Tiefziehmaschine bzw. eine Thermoformmaschine und ein Verfahren zur Herstellung von tiefgezogenen Gegenständen zur Verfügung zu stellen, bei welcher(m) die verschiedenartigsten Gegenstände insbesondere Massenprodukte aus thermoformbaren Kunststoffolien oder -platten auch extremer Höhe, nur mittels Vorstreckverfahren oder Positivtiefziehen herstellbare Gegenstände und auch solche mit U-Rand herstellbar sind. Ferner soll die Maschine mit äußerst wenig Abfall und mit wenig Energieaufwand arbeiten und die Anzahl der Bearbeitungsstationen beliebig erweiterbar sein.

Zur Lösung dieser Aufgabe wird erfindungsgemäß eine Thermoformmaschine zur Herstellung von tiefgezogenen Gegenständen, Behältern, Verpackungen oder dgl nach Anspruch 1 zur Verfügung gestellt. Dadurch, daß die Festlegungseinrichtungen voneinander getrennt bzw. unabhängig sind, ist es möglich, den Folienverschnitt am Rand der Festlegungseinrichtungen zu minimieren und kostengünstig und ökonomisch sowie materialsparend zu arbeiten. Dadurch, daß weiters die Bearbeitungsstationen entlang von wenigstens zwei, insbesondere parallel zueinander angeordneten Reihen bzw. Linien angeordnet bzw. positioniert sind, kann die Zykluszeit der Vorrichtung bemerkenswert reduziert werden, wodurch gleichzeitig eine extreme Energieeinsparung und eine kurze Zykluszeit erreicht werden. Indem weiters die Festlegungseinrichtungen als mit der Maschine nicht fest verbundene Spannrahmen ausgebildet sind, gelingt auch eine individuelle Größeneinstellung der Festlegungseinrichtungen an dem zu bearbeitenden Folienzuschnitt, so daß der Folienzuschnitt weiter minimiert werden kann. Dadurch, daß die Folienzuschnitte oder die Plattenzuschnitte in Spannrahmen eingespannt werden, ist es möglich, den Verschnitt am Rand der Festhalteeinrichtungen zu minimieren und so materialsparend zu arbeiten. Indem weiters die Spannrahmen aus Leichtmetall oder Kunststoff angefertigt werden können und weder mit der Maschine noch miteinander fest verbunden sind, kann die Beförderungszeit der Spannrahmen zu den einzelnen Bearbeitungsstationen mit wenig Energieaufwand sehr kurz gehalten werden, wodurch die Maschine mit kurzen Zykluszeiten kostengünstig und ökonomisch arbeitet.

Indem die Festlegungseinrichtungen entlang von Gleitlagern bzw. Führungen, insbesondere aus Kunststoff, bewegbar sind, gelingt eine rasche, geräuscharme und energiesparende Führung der Festlegungseinrichtungen entlang der zueinander parallel angeordneten Linien bzw. Reihen, so daß eine weitere Energieeinsparung gegenüber den bekannten Karussellsystemen, bei welchen in nachteiliger Weise das gesamte System bewegt werden muß, erzielt werden kann. Weiters können durch die Anordnung, daß die Festlegungseinrichtungen entlang von Gleitlagern bzw. Führungen bewegbar sind, auch in einfacher Weise Verschleißteile rasch und ohne lange Stillstandszeiten der Maschine getauscht werden, wodurch sich eine weitere Steigerung der Effizienz der Tiefziehmaschine erreichen läßt.

Gemäß einer Weiterbildung der Tiefziehmaschine der vorliegenden Erfindung können die Spannleisten an gegenüberliegenden Rahmenelementen der Festlegungseinrichtungen verstellbar angeordnet sein. Durch eine derartige verstellbare Anordnung der Spannleisten gelingt es, einerseits die Spannleisten an beliebige Größen der Folienzuschnitte anzupassen und andererseits kann ohne aufwendige Tausch- bzw. Nachspannvorrichtungen durch einfaches Einstellen der Spannleisten die Maschine auch auf Kunststoffolien angepaßt werden, die sich bei der Erwärmung stark dehnen bzw. einer starken Volumsvergrößerung unterliegen, so daß lediglich durch Nachstellen der Spannleisten ein sicheres und zuverlässiges, ebenes Halten der Folienzuschnitte erreicht werden kann. Durch ein derartiges Nachspannen der erwärmten Folienzuschnitte gelingt insbesondere ein extrem zuverlässiges und formstabiles Tiefziehen, wobei auch die Ausbildung von Falten und sonstigen Fehlern aufgrund des Durchhängens der Folienzuschnitte mit Sicherheit vermieden werden können. Darüber hinaus ist es mit einer derartigen Ausbildung möglich, die Tiefziehmaschine stufenlos auf jede Zuschnittsbreite und -länge einzustellen, wodurch eine Vielzahl von unterschiedlichen Formen bzw. Gegenständen auf ein und derselben Maschine ohne die Notwendigkeit des Tauschens von Maschinenteilen rasch und zuverlässig hergestellt werden kann.

Gemäß einer Weiterbildung der Erfindung ist die Vorrichtung so ausgebildet, daß die Anzahl der Festlegungseinrichtungen die Anzahl der Bearbeitungsstationen übersteigt. Durch eine derartige Ausbildung kann die Maschine so geführt werden, daß sich immer die überzähligen Festlegungseinrichtungen an der Übergabestelle zwischen den einzelnen Reihen von Bearbeitungsstationen befinden, so daß eine rasche und zuverlässige Bearbeitung in der gesamten Tiefziehmaschine sichergestellt ist.

Gemäß einer Weiterbildung der Erfindung werden die Spannrahmen auf zwei Gleitleisten angebracht und diese Einheit wird, wie vorher beschrieben, in den und zwischen den Reihen bzw. Linien translatorisch bewegbar. Diese Weiterbildung der Erfindung bedeutet, daß die Gleitleistenlänge immer gleich sein kann, unabhängig davon, daß darauf der vorgesehene, größte oder kleinste Spannrahmen befestigt ist.

Die Bearbeitungsstationen der Tiefziehmaschine können eine Einlegestation für einen Folienzuschnitt, wenigstens eine Heiz- bzw. Wärmestation, wenigstens eine Tiefziehstation und wenigstens eine Nachbearbeitungsstation sowie eine Entnahmestation umfassen. Durch eine derartige Einrichtung ist es möglich, die Maschine an die verschiedensten Erfordernisse lediglich durch Hinzufügen eines Modulelements einer Bearbeitungsstation, in welcher ein Spannrahmen mit eingelegtem Folienzuschnitt bearbeitet werden kann, an die gegebenen Erfordernisse anzupassen.

Durch das Vorsehen einer Stanzstation können die fertig bearbeiteten, tiefgezogenen Gegenstände naht- und fugenlos aus den Spannrahmen ausgestanzt werden, wodurch formschöne Gegenstände ohne scharfe Grate bzw. Randwülste erhalten werden können.

Gemäß einer Weiterbildung der Erfindung ist die Vorrichtung in bevorzugter Weise so weitergebildet, daß die Festhalteeinrichtungen bzw. Spannrahmen in den und zwischen den Reihen bzw. Linien von Bearbeitungsstationen translatorisch bewegbar sind. Durch eine derartige Anordnung gelingt es, durch Vorsehen der Anzahl von Spannrahmen, die der Anzahl von Bearbeitungsstationen entspricht, plus zwei Spannrahmen, die sich jeweils an den Obergangsstationen zwischen zwei zueinander angeordneten Reihen bzw. Linien befinden, das Auslangen zu finden, wodurch neben einer raschen und kostengünstigen Arbeitsweise der Maschine auch eine extrem einfache, bauliche Anordnung der Maschine realisierbar wird.

Die Festhalteeinrichtungen bzw. Spannrahmen sind entlang der zueinander parallel angeordneten Reihen bzw. Linien auf einer der heutigen Technik bekannten Weise bewegbar. Indem die Spannrahmen und auch die Gleitleisten aus Leichtmetall oder Kunststoff gefertigt werden können, sind sie kostengünstig zu erzeugen, und da sie weder miteinander noch mit der Maschine fest verbunden sind, sind sie bei Formen- und Werkzeugtausch einfach und schnell austauschbar, wodurch sich eine weitere Effizienz der Thermoformmaschine erreichen läßt.

Die Bearbeitungsstationen dieser Thermoformmaschine hat eine Einlegestation für einen Folien- oder Plattenzuschnitt, wenigstens eine Heizstation, eine Tiefzieh- bzw. Formstation, wenigstens eine Stanzstation - sowie - eine Entnahmestation für die Abfälle umfassen. Es ist jedoch möglich, die Maschine durch hinzufügen beliebiger Anzahl von Modulelementen weiterer Bearbeitungsstationen an jedes Erfordernis anzupassen.

Zur weiteren Verdeutlichung wird die Erfindung nachfolgend in den beiliegenden Zeichnungen erläutert. In diesen zeigt:
Fig. 1 schematisch die Spannrahmen; die auf Gleitleisten befestigt sind;
Fig. 2 die Ausbildung von Spannrahmen; und
Fig. 3 bis 12 ein Beispiel einer Thermoformmaschine mit acht Stationen.

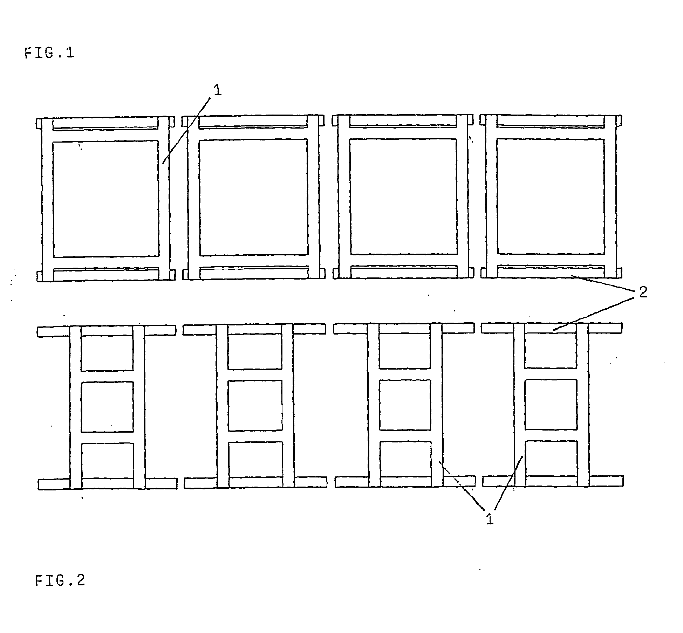

In Fig. 1 ist eine Thermoformmaschine bzw. Tiefziehmaschine mit vier großen Spannrahmen 1 dargestellt, die auf Gleitleisten 2 laufen. Durch die Anordnung der Spannrahmen wird der Weg zwischen den einzelnen Bearbeitungsstationen sowohl bei Vorliegen von großen Spannrahmen 1 gemäß Fig. 1 als auch kleinen Spannrahmen 1 gemäß Fig. 2 gleich lang sein und es gelingt dadurch, die Mechanismen der einzelnen Bearbeitungsstationen nicht bewegbar, wie bei Maschinen mit Kettentransport, sondern fix anzubringen, wodurch eine wesentliche Reduzierung der Gestehungskosten der Maschine erzielt wird.

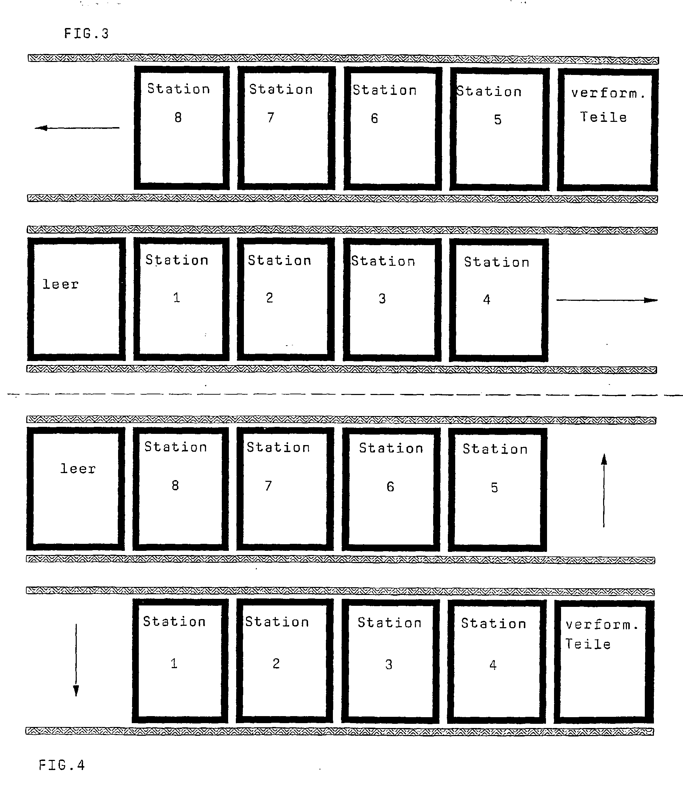

Das Beispiel skizziert eine Thermoformmaschine gemäß Fig. 3 bis 12 mit acht Stationen skizziert, was jedoch nicht bedeutet, daß erfindungsgemäß nicht eine andere Anzahl von Bearbeitungsstationen möglich ist. In Fig. 3 werden die acht Stationen mit Zahlen wie folgt bezeichnet: Station 1 ist die Einlegestation, wo in den Spannrahmen 1 ein Folien- oder Plattenzuschnitt eingelegt wird; Station 2 ist die erste Heizstation, WO der Kunststoffzuschnitt vorgeheizt wird; Station 3 ist die zweite Heizstation, wo der Kunststoffzuschnitt fertiggeheizt bzw. auf thermoformbare Temperatur gebracht wird; Station 4 ist die Formstation, wo der Kunststoffzuschnitt tiefgezogen bzw. verformt wird; Station 5 ist die erste Stanzstation, wo in die fertig geformte Teile Löcher gestanzt werden können oder wo eine teilweise Ausstanzung der Fertigteile erfolgt, falls die Ausstanzung in zwei Etappen günstiger ist; Station 6 ist die zweite Stanzstation zum Ausstanzen der Fertigteile, die noch in dem Zuschnitt vorerst hängenbleiben und so zu der nächsten Bearbeitungsstation gelangen; Station 7 ist die Stapelstation, wo die Fertigteile aus dem Kunststoffzuschnitt ausgebrochen und gestapelt werden; Station 8 ist die Entnahmestation, wo das Stanzgitter aus dem Spannrahmen 1 entnommen wird. Hier soll bemerkt werden, daß die erfindungsgemäße Maschine auch mit einer Stanzstation gestaltet werden kann, wo die Fertigteile durchgestanzt werden. In diesem Fall bleiben die Fertigteile nicht am Zuschnitt hängen, sondern - fallen durch und werden gestapelt.

Nachfolgend wird das Verfahren bzw. Arbeitsweise der Maschine beschrieben. Fig. 3 und 4 zeigen die Maschine in der Weise, daß die Anzahl der Festhalteeinrichtungen bzw. Spannrahmen 1 der Anzahl der Bearbeitungsstationen, in diesem Fall acht, + zwei beträgt. Fig. 3 zeigt den Stand der Spannrahmen 1 einer schon in Betrieb befindlichen Maschine, und zwar vor Beginn eines neuen Zyklus. Nach Beginn des Zyklus geschieht folgendes: die fünf Spannrahmen 1 in der ersten Reihe - in der Skizze die untere Reihe - werden in die Richtung des Pfeiles verschoben. Gleichzeitig werden auch die fünf Spannrahmen 1 in der zweiten Reihe in die Richtung des Pfeiles verschoben. Fig. 4 zeigt die Spannrahmen 1 in der neuen Position, indem jeder Spannrahmen 1 in eine neue Bearbeitungsstation gelangen ist. So zum Beispiel: der leere Spannrahmen 1 befindet sich nun in der ersten Station und zum Beispiel der Spannrahmen 1 mit verformten Teilen, der vor Beginn des Zyklus in der Oberstellposition war, befindet sich nun in der Station 5. Sobald die verschobenen Spannrahmen 1 in der neuen Position angekommen sind, beginnt die Arbeit auf einmal aller acht Stationen. Bevor die Bearbeitung der Kunststoffzuschnitte in allen acht Stationen fertig geworden sind, werden die aus den Bearbeitungsstationen herausgeschobenen Spannrahmen 1 in die andere Reihe überstellt, demzufolge kommt der Spannrahmen 1 mit den verformten Teilen von der ersten Reihe in die zweite und der leere Spannrahmen 1 kommt von der zweiten Reihe in die erste. Bei Beendigung des Zyklus, wenn also alle acht Bearbeitungsstationen fertig sind, ist die Lage der Spannrahmen 1 wieder nach Fig. 1 und ein neuer Zyklus kann beginnen.

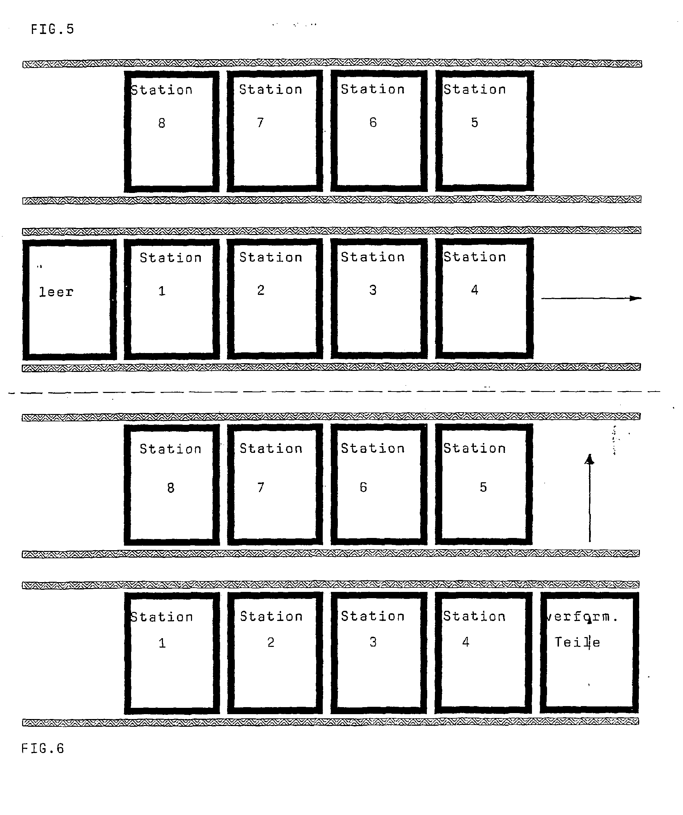

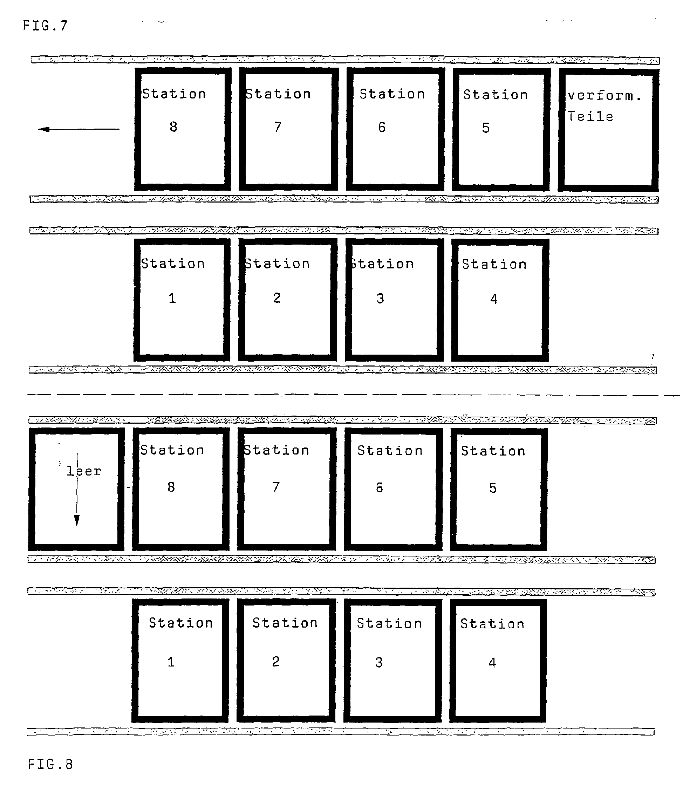

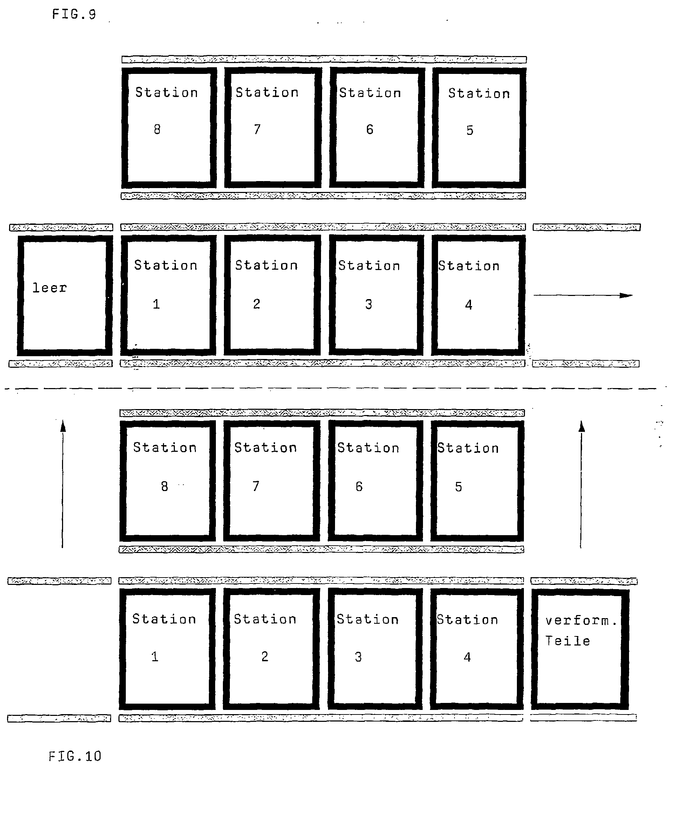

Gemäß einer Weiterbildung der Erfindung kann die Vorrichtung auch so gebildet sein, daß die Anzahl der Festhalteeinrichtungen bzw. Spannrahmen 1 der Anzahl der Bearbeitungsstation plus nur eine beträgt. Der Ablauf eines Arbeitszyklus der Maschine wird in diesem Fall anders. Es wird wieder als Beispiel eine Maschine mit 8 Bearbeitungsstationen, ähnlich wie vorher beschrieben, gewählt; die Gesamtzahl der Spannrahmen 1 wird hier jedoch 8 + 1, also zusammen 9 Stück, sein. Um die Beschreibung zu vereinfachen, wird vollkommen willkürlich nur als Beispiel die Zykluszeit mit 2 Sekunden angenommen. Fig. 5 zeigt die 9 Spannrahmen 1 vor Beginn eines Zyklus. Die Fig. 6 zeigt die Lage der Spannrahmen 1 nach 0,3 Sek., indem die 5 Spannrahmen 1 in der ersten Reihe - in der Skizze die untere Reihe - verschoben worden sind. Jeder der fünf Spannrahmen 1 befindet sich nun in einer anderen Position und die Bearbeitungsstationen 1 bis 4 beginnen mit der Arbeit. In den Bearbeitungsstationen 5 bis 8 keine Änderung. Der Spannrahmen 1 mit den verformten Teilen wird gleichzeitig, wo die Bearbeitungsstationen 1 bis 4 mit der Arbeit beginnen, von der ersten Reihe in die zweite Reihe befördert und bei 0,8 Sek. - nach Zyklusbeginn - erreicht die Position in der zweiten Reihe, wie es Fig. 7 zeigt. Nach kurzer Wartezeit, genau bei Halbzeit des Zyklus, also um 1,0 Sek., werden in der zweiten Reihe die Spannrahmen 1 verschoben. Die Zeit ist nach Beendigung dieses Transportes 1,3 Sek. In der ersten Reihe, wo sich die Bearbeitungsstationen 1 bis 4 befinden, keine Änderung. Fig. 8 zeigt die Lage der Spannrahmen 1 bei 1,3 Sek. Zykluszeit. Nun wird sofort die Bearbeitung der Kunststoffzuschnitte auch in den Bearbeitungsstationen 5 bis 8 beginnen und der Spannrahmen 1, hier als leer bezeichnet, in die erste Reihe befördert. Die Zykluszeit, wo dieser leere Spannrahmen 1 in der ersten Reihe angekommen ist, beträgt 1,8 Sek. Nach 2 Sek. Zykluszeit ist die Lage der Spannrahmen 1 wieder so, wie Fig. 5 zeigt. Die Zykluszeit der zweiten Reihe beträgt natürlich ebenfalls 2 Sek., ist nur um die Hälfte der Zykluszeit verschoben, und ein neuer Zyklus kann beginnen.

In Zusammenhang mit der konstruktiven Ausbildung der Erfindung, bei welcher die Festhalteeinrichtungen voneinander getrennt bzw. unabhängig sind und die Bearbeitungsstationen entlang von wenigstens zwei, insbesondere parallel zueinander angeordneten Reihen bzw. Linien angeordnet sind, ist es günstig, wenn die Zahl der Bearbeitungsstationen in jeder der Reihen untereinander gleich ist, um eine asymmetrische Arbeitsweise der Vorrichtung vermeiden zu können. Es ist nämlich einfacher bzw. günstiger, wenn-sich die Überstellpositionen in einer Linie befinden. Allerdings ist dies keine Bedingung für die Erfindung, nur wird die Überstellung eines Spannrahmens 1 in eine andere Reihe, wenn die neue Position nicht in einer Linie ist, zum Beispiel mit einem Roboter einfach und verläßlich gelöst. Ein Fachmann der Tiefziehtechnik wird jedoch, wenn die vorgesehenen Bearbeitungsstationen eine ungerade Zahl aufweisen, eine andere, ebenfalls mögliche Lösung wählen, indem eine Station als leere Station angeordnet wird. Dies bedeutet nämlich keine Verkürzung der Zykluszeiten, also keine Verminderung der Leistung der Maschine, sondern nur daß um einen Spannrahmen 1 mehr notwendig ist. Man hat jedoch die Möglichkeit, daß eine Bearbeitungsstation für eine Eventualität zusätzlich eingerichtet werden kann.

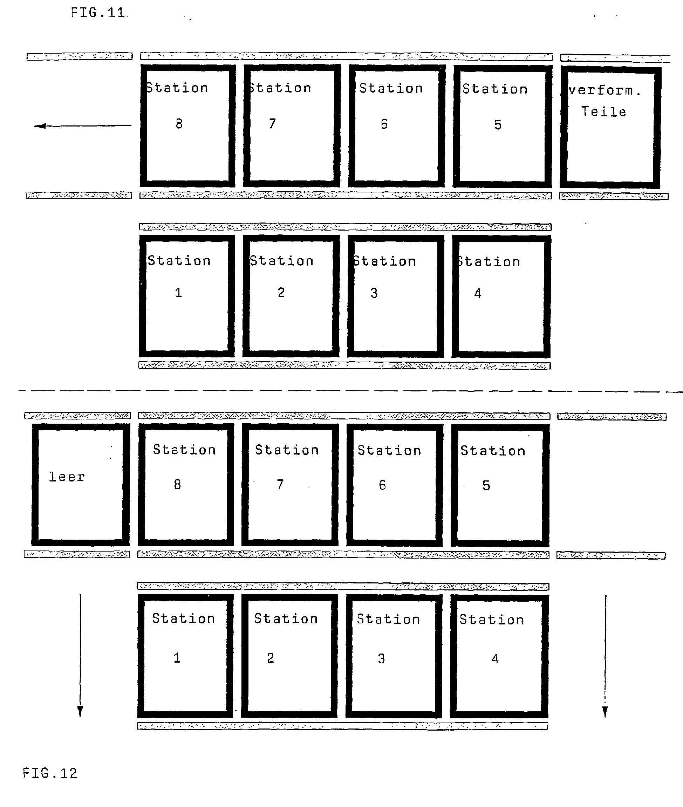

Die Überstellung der aus der Bearbeitungsstationen herausgeschobenen Spannrahmen 1 in die andere Reihe wird in irgendeiner bekannter Weise erfolgen, zum Beispiel, ein Roboter nimmt den Spannrahmen 1 und setzt ihn in die zweite Linie. Gemäß einer Weiterbildung der Erfindung wird nachfolgend ein günstiges Verfahren vorgestellt bzw. beschrieben. Die auf die Gleitleisten 2 montierten Spannrahmen 1 gleiten auf Kunststoffschuhen oder Rollen vorzugsweise auf Schienen. Gemäß der Weiterbildung der Erfindung werden nun diese Schienen geteilt, wie in Fig. 9 bis 12 ersichtlich ist. Einfacherweise wird vollkommen willkürlich nur als Beispiel nun der Ablauf eines Arbeitszyklus wie folgt beschrieben. Fig. 9 zeigt die 8 Spannrahmen 1 in den 8 Bearbeitungsstationen. Das Schienenpaar, auf welchen die Gleitleisten 2 mit den daraufbefestigten Spannrahmen 1 gleiten oder rollen, ist, wie auf der Skizze ersichtlich, für die je vier Stationen per Reihe in einem und für die Überstellposition auf beider Seite geteilt. Das Schienenpaar für den zu überstellenden Spannrahmen 1 ist auf beiden Seiten, jedoch nur einmal und nicht für jede Reihe notwendig. Als Beispiel wird hier wieder, wie schon vorher einmal beschrieben, für einen Zyklus 2,0 Sek. gewählt. Fig. 9 zeigt die fünf Spannrahmen 1 vor bzw. bei Beginn eines Zyklus. Nach Beginn des Zyklus werden die 5 Spannrahmen 1 Richtung Pfeil verschoben und bei 0,3 Sek. ist der Transport fertig und die neue Lage zeigt Fig. 10. Bei Beendung dieses Transportes, also um 0,3 Sek., beginnen die Bearbeitungsstationen 1 bis 4 zu arbeiten und der Transport des kurzen Schienenpaares mit dem darauf befindlichen Spannrahmen 1 und gleichzeitig wird der Transport des auf dem anderen Ende der Reihe befindlichen, leeren Schienenpaares in die zweite Reihe begonnen. Um 0,8 Sek. nach Zyklusbeginn erreichen beide kurze Schienenpaare die zweite Reihe, wie es die Skizze von Fig. 11 zeigt. Um 1,0 Sek., also genau um die halbe Zykluszeit, beginnt in der zweiten Reihe ein Zyklus, indem die fünf Spannrahmen 1 in die mit Pfeil angezeigte Richtung verschoben werden. Durch diesen Transport gelangt also der Spannrahmen 1 mit verformten Teilen in die Station Nr. 5 und der leer gewordene Spannrahmen 1 von der Station Nr. 8 auf das kurze Schienenpaar. Wenn dieser Transport beendet ist, ist die Zeit nach gewähltem Beispiel 1,3 Sek. Bei dieser Zeit beginnen die Stationen 5 bis 8 mit der Arbeit und die kurzen Transportschienenpaare beginnen den Weg zu der ersten Reihe, wie es in Fig. 12 ersichtlich ist. Die Zeit ist, wenn die zwei Schienenpaare, das eine mit dem leeren Spannrahmen 1, das andere leer, in der ersten Reihe angekommen sind, 1,8 Sek. Nun ist dieselbe Lage der Spannrahmen 1 und der Transportschienenpaare erreicht wie am Beginn, ersichtlich in Fig. 9. Nach Ablauf der Zykluszeit, also um 2 Sek., kann ein neuer Zyklus beginnen. Die Bearbeitungsstationen Nr. 5. bis 8 beenden den Zyklus natürlich um 3,0 Sek., da sie den Zyklus um 1,0 Sek. begonnen haben.

Diese Weiterbildung der Erfindung bringt den Vorteil, daß weniger Schienen notwendig sind und der Transport eines Spannrahmens 1 samt Schienen einfacher, also kostengünstiger zu gestalten ist, als wenn der Spannrahmen 1 von dem Schienenpaar zuerst hochgehoben, dann transportiert und wieder auf ein Schienenpaar abgesetzt werden muß.

Falls eine Maschine mit ungeraden Zahlen der Bearbeitungsstationen erzeugt werden muß, so kann dieses Verfahren mit den geteilten Schienen auch, jedoch nur teilweise auf einer Seite der Bearbeitungsreihe verwendet werden.

Nach einer weiteren Weiterbildung der Erfindung wird ein Verfahren zur Verfügung gestellt, welches die oft notwendige und aufwendige, also teuere Vorrichtung für die Extra-Vorwärmung der Folienbahn eliminiert. Es gibt Kunststoffolien oder -platten, die sich bei der Erwärmung besonders stark dehnen, zum Beispiel: Polypropylen. Es kann nach der Heizstation ein so großer "Bauch" entstehen, daß er bei der Verformung Falten verursacht. Um vorzubeugen, wird die Folienbahn in einer separaten Vorrichtung vorgewärmt, wobei die Dehnung der Folienbahn vor Einführung in die Thermoformmaschine teilweise stattfindet. Eine weitere Dehnung in der oder in den Wärmestation(en) wird nicht mehr allzu störend sein. Die Erfindung löst dieses Problem so, daß erstens: unbedingt mindestens zwei Stationen für die Erwärmung der Folien- oder Plattenzuschnitte eingerichtet werden. Bei der erste Station wird eine Kontaktheizung so eingerichtet, daß auf eine beheizte Platte, die aus Leichtmetall oder Stahl oder Kupferlegierung erzeugt wurde und die Oberfläche so behandelt oder gestaltet wird, daß sich warme Kunststoffolien oder -platten nicht kleben, sondern möglichst darauf gleiten können, die Kunststoffolie oder -platte mit einem schaumartigen oder ähnlich federnden, wärmebeständigen Kunststoffplatte oder -folie, die ebenfalls gut gleitende Oberfläche aufweist, daraufgedrückt wird. Der Spannrahmen 1 werden bei dieser Vorwärmestation während der Erwärmung des Kunststoffzuschnittes ein wenig geöffnet, damit der Kunststoffzuschnitt sich frei dehnen kann. Bei Beendung der Erwärmungsperiode schließt sich der Spannrahmen 1 und die stark vorgewärmte Folie oder Platte in gelangt in die zweite Heizstation. Dort kann sich diese Prozedur wiederholen und der Kunststoffzuschnitt in eine dritte Heizstation gelangen, um dort fertig erhitzt zu werden, oder der Kunststoffzuschnitt wird gleich in der zweiten Heizstation fertig auf verformbare Temperatur gebracht. Welches Verfahren der Fachmann wählt, hängt von der Folien- oder Plattendicke und auch von der gewünschten Zykluszeit ab. Durch die Einrichtung dieser Methode wird die Anwendung einer gesonderten Vorrichtung nicht notwendig und erfindungsgemäße Thermoformmaschine besonders preisgünstig sein.

## Patentansprüche

1. Tiefziehmaschine bzw. Thermoformmaschine zur Herstellung von tiefgezogenen oder thermisch verformbaren Gegenständen wie Behältern, Verpackungen oder dgl. aus thermisch verformbaren Kunststoffolien oder -platten, wobei Kunststoffzuschnitte in Festhalteeinrichtungen, insbesondere in Spannrahmen (1), angeordnet und relativ zu Bearbeitungsstationen bewegbar sind, wobei die Bearbeitungsstationen von einer Einlegestation, wenigstens einer Heizstation, einer Formstation, wenigstens einer Stanzstation, einer Entnahmestation für fertige Teile und einer Entnahmestation für Abfälle gebildet sind, **dadurch gekennzeichnet, daß** die Festhalteeinrichtungen voneinander getrennt bzw. unabhängig sind, die Bearbeitungsstationen entlang von wenigstens zwei, parallel zueinander angeordneten Reihen bzw. Linien angeordnet bzw. positioniert sind, und ein Maschinenzyklus den taktweisen Einsatz aller Arbeitsstationen umfaßt.

2. Vorrichtungen nach Anspruch 1, **dadurch gekennzeichnet, daß** die Festhalteeinrichtungen bzw. Spannrahmen (1) in den und zwischen den Reihen bzw. Linien von Bearbeitungsstationen translatorisch bewegbar sind.

3. Vorrichtung nach Anspruch 1 oder 2, **dadurch gekennzeichnet, daß** die Anzahl der Festhalteeinrichtungen bzw. Spannrahmen (1) die Anzahl der Bearbeitungsstationen übersteigt.

4. Vorrichtung nach Anspruch 1, 2 oder 3, **dadurch gekennzeichnet, daß** verschieden große Festhalteeinrichtungen bzw. Spannrahmen (1) auf gleich langen Gleitleisten (2) angeordnet sind.

5. Vorrichtung nach einem der Ansprüche 1 bis 4, **dadurch gekennzeichnet, daß** für die translatorische Bewegungen der Festhalteeinrichtungen bzw. Spannrahmen (1) geteilte Schienenpaare angeordnet sind.

6. Vorrichtung nach einem der Ansprüche 1 bis 5, **dadurch gekennzeichnet, daß** die Festhalteeinrichtungen bzw. Spannrahmen (1) in der Vorwärmperiode geöffnet werden.

## Claims

1. A deep-drawing machine or thermoforming machine for the production of deep-drawn or thermally formable articles such as containers, packages or the like, from thermoformable plastic sheets or plates, wherein plastic blanks are arranged in fixing means, particularly tenter frames (1), and movable relative to processing stations comprised of an inserting station, at least one heating station, a forming station, at least one stamping station, a finished parts removing station and a waste removing station, **characterized in that** said fixing means are separated and independent from one another, said processing stations are arranged or positioned along at least two, particularly parallelly extending, rows or lines, and a machine cycle comprises the clock-controlled use of all of said processing stations.

2. Device according to claim 1, **characterized in that** the fixing means or tenter frames (1) are translationally movable within or between the rows or lines of processing stations.

3. Device according to claim 1 or 2, **characterized in that** the number of fixing means or tenter frames (1) exceeds the number of processing stations.

4. Device according to claim 1, 2 or 3, **characterized in that** differently large fixing means or tenter frames (1) are arranged on equally long slide ledges (2).

5. Device according to any one of claims 1 to 4, **characterized in that** divided rail pairs are arranged for the translational movements of the fixing means or tenter frames (1).

6. Device according to any one of claims 1 to 5, **characterized in that** the fixing means or tenter frames (1) are opened in the preheating phase.

## Revendications

1. Machine d'emboutissage ou de thermoformage pour la fabrication d'objets emboutissables ou thermoformables comme des conteneurs, des emballages ou similaires en feuilles ou plaques de matière plastique thermoformables, des flans de matière plastique étant disposés dans des dispositifs de fixation, en particulier dans des cadres de serrage (1), et étant mobiles par rapport à des stations de travail, les stations de travail étant constituées d'une station de mise en place, d'au moins une station de chauffage, d'une station de formage, d'au moins une station d'estampage, d'une station de prélèvement de pièces finies et d'une station de prélèvement de déchets, **caractérisée en ce que** les dispositifs de fixation sont séparés les uns des autres ou indépendants, les stations de travail sont disposées ou positionnées le long d'au moins deux rangées ou lignes parallèles l'une à l'autre, et un cycle de machine comprend l'emploi cyclique de toutes les stations de travail.

2. Dispositif selon la revendication 1, **caractérisé en ce que** les dispositifs de fixation ou cadres de serrage (1) sont mobiles en translation dans et entre les rangées ou lignes de stations de travail.

3. Dispositif selon la revendication 1 ou 2, **caractérisé en ce que** le nombre des dispositifs de fixation ou cadres de serrage (1) est supérieur au nombre de stations de travail.

4. Dispositif selon la revendication 1, 2 ou 3, **caractérisé en ce que** des dispositifs de fixation ou cadres de serrage (1) sont disposés sur des barres de glissement (2) de même longueur.

5. Dispositif selon l'une des revendications 1 à 4, **caractérisé en ce que** des paires de rails divisés sont disposés pour les mouvements en translation des dispositifs de fixation ou cadres de serrage (1).

6. Dispositif selon l'une des revendications 1 à 5, **caractérisé en ce que** les dispositifs de fixation ou cadres de serrage (1) sont ouverts pendant la période de préchauffage.
